# EUROPEAN PATENT SPECIFICATION

(11) **EP 2 355 915 B1**
(45) Date of publication and mention of the grant of the patent: **14.03.2018**
(21) Application number: 09768579.6
(22) Date of filing: 09.12.2009
(51) Int. Cl.: B01D 39/16

(54) **METHOD FOR SELECTIVE REMOVAL OF LARGE PARTICLES FROM PARTICLE SLURRIES**
VERFAHREN ZUR SELEKTIVEN ENTFERNUNG VON GROSSEN TEILCHEN AUS TEILCHENAUFSCHLÄMMUNGEN
PROCÉDÉ POUR LE RETRAIT SÉLECTIF DE GROSSES PARTICULES À PARTIR DE BOUILLIES DE PARTICULES

(30) Priority: 09.12.2008 US 120995 P
(43) Date of publication of application: 17.08.2011
(73) Proprietor: E. I. du Pont de Nemours and Company, Wilmington, DE 19898 (US)
(72) Inventor: VELU, Yogeshwar, K., Midlothian Virginia 23112 (US); COMPTON, Timothy, Frederick, Midlothian Virginia 23112 (US)
(74) Representative: Dannenberger, Oliver Andre
(86) International application number: PCT/US2009/067272
(87) International publication number: WO 2010/077718

(56) References cited:
- WO-A1-01/19490
- WO-A1-02/089951
- WO-A2-02/20130
- US-A- 6 015 499
- US-A1- 2007 017 879
- US-A1- 2007 075 015

## Description

### FIELD OF THE INVENTION

The present invention relates broadly to filters for separation of the large size fraction of particles from slurries comprising large and small particles, and in particular to chemical-mechanical polishing (CMP) slurries.

### BACKGROUND

In the general mass production of semiconductor devices, hundreds of identical "integrated" circuit traces are photolithographically imaged over several layers on a single semiconducting wafer which, in turn, is cut into hundreds of identical dies or chips. Within each of the die layers, the circuit traces are insulated from the next layer by an insulating material. It is desirable that the insulating layers are provided as having a smooth surface topography. In this regard, a relatively rough surface topography may result in poor coverage by subsequently deposited layers, and in the formation of voids between layers. As circuit densities in semiconductor dies continue to increase, any such defects become unacceptable and may render the circuit either inoperable or lower its performance to less than optimal.

To achieve the relatively high degree of planarity required for the production of substantially defect free dies, a chemical-mechanical polishing (CMP) process is becoming increasingly popular. Such process involves chemically etching the wafer surface in combination with mechanical polishing or grinding. This combined chemical and mechanical action allows for the controlled removal of material. CMP is accomplished by holding the semiconductor wafer against a rotating polishing surface, or otherwise moving the wafer relative to the polishing surface, under controlled conditions of temperature, pressure, and chemical composition. The polishing surface, which may be a planar pad, formed of a relatively soft and porous material is wetted with a chemically reactive and abrasive aqueous slurry. The aqueous slurry, which may be either acidic or basic, typically includes abrasive particles; a reactive chemical agent such as a transition metal chelated salt or an oxidizer, and adjuvants such as solvents, buffers, and passivating agents. Within the slurry, the salt or other agent provides the chemical etching action, with the abrasive particles, in cooperation with the polishing pad, providing the mechanical polishing action. The basic CMP process is further described in the following U.S. Pat. Nos.: 5,709,593; 5,707,274; 5,705,435; 5,700,383; 5,665,201; 5,658,185; 5,655,954; 5,650,039; 5,645,682; 5,643,406; 5,643,053; 5,637,185; 5,618,227; 5,607,718; 5,607,341; 5,597,443; 5,407,526; 5,395,801; 5,314,843; 5,232,875; and 5,084,071.

Slurries for CMP, which are further described in U.S. Pat. Nos. 5,516,346; 5,318,927; 5,264,010; 5,209,816; 4,954,142, may be of either an oxide, i.e., ceramic, or metal abrasive particle type. Common oxide-type particles include silica (SiO₂) ceria (CeO₂), silicon carbide (SiC), silicon nitride (Si₃N₄), iron oxide (Fe₂O₃), alumina (Al₂O₃), and the like, with common metal particles including tungsten and copper. The slurry can have a mean average abrasive particle size as low as between about 0.02-0.3 µm for oxide slurries.

As a result of agglomeration and drying from exposure to air, and also during the planarization process itself, larger particles may develop within the slurry. Although the metal-type slurries generally are more susceptible to agglomeration than the oxide types, the problem may present in either type of slurry depending upon the slurry composition and ambient conditions. Should the agglomerated particles be entrained within the CMP slurry, significant damage to the wafer surface being planarized can result. Moreover, it is known that to achieve a low defect rate and high wafer yield, each successive wafer substrate should be polished under substantially similar conditions.

The CMP process stream can be filtered at the point of use to separate agglomerated particles of a size larger than a predetermined limit from the balance of the slurry. Initially, filters employing conventional membranes elements, which may be of a phase inversion or bi-axially stretched variety generally having particle retention ratings between about 0.3-0.65 µm, were suggested. In service, however, membranes filters of such type were observed to load almost instantaneously with particulate and soon were judged unacceptable for the CMP process. The characteristics of conventional membrane filter media are described in greater detail in U.S. Pat. Nos. 5,449,917; 4,863,604; 4,795,559; 4,791,144; 4,770,785; 4,728,394; and 3,852,134.

Alternative filter elements which have met with more success in the CMP process employ fibrous media such as randomly orientated webs. Indeed, unlike membranes which rely on surface-type filtration, these fibrous media utilize a tortuous path, depth-type filtration mechanism. In order to provide increased service life, however, a fibrous media must be selected as having a relatively open and permeable structure rated, for example, at about 40-100 µm absolute or 5-30 µm nominal. Such a rating ensures substantially no retention of particles in the 0.5-2 µm range which could cause cake formation and, ultimately, premature blockage of the filter element. As a drawback, the more open and permeable structure does allow for some passage of large size particles which could damage the substrate being planarized. That is, fibrous media in general characteristically exhibit a gradually decreasing retention profile as a function of decreasing particle size which is in contrast to the sharper particle size cutoff exhibited by membranes and other surface-type media. Depth-type and other filter media are described in further in U.S. Pat. Nos. 5,637,271; 5,225,014; 5,130,134; 4,225,642; and 4,025,679. Document WO 02/089951 A1 discloses a method for removing the high particle size fraction of a slurry using a depth-type filter media. A filter element would be desirable exhibiting a particle retention profile which is comparable to surface filtering membranes, but with a service life which is more like that of a depth filtering media. In particular with a retention profile that passes particles of below around 0.1 micron in diameter but has a steep section to its particle size verses filtration efficiency curve that allows particles above about 0.5 microns to be removed efficiently.

### BRIEF DESCRIPTION OF THE DRAWINGS

Fig. 1 shows a plot of particle size verses filtration efficiency for a filter medium of the invention and a comparative sample.
Fig. 2 shows a plot illustrating the ability of the medium of the invention to be regenerated.

### SUMMARY OF THE INVENTION

A method for removing the high particle size tail of the particle size distribution of a slurry while leaving smaller particles in the slurry comprising the steps of;
(i) providing a filter media having a first and second side and being formed of at least one sheet of a fabric having a first and second surface defining a thickness dimension of said fabric there between, said fabric comprising at least one layer comprising polymeric fibers having a number average fiber diameter of less than 1000 nm,
(ii) supplying a slurry stream having a multiplicity of particle sizes comprising a first set of particles of maximum dimension less than 0.2 microns and a second set of larger particles of maximum individual dimension of greater than 0.45 microns to the first side of said filter media, and
(iii) passing the slurry stream through said filter media to the second side thereof whereby at least a portion of the larger particles in the slurry are retained on the first side of said media,
wherein the filtration efficiency of the fabric towards the first set of particles is less than 0.01 and the filtration efficiency towards the second set of particles is greater than 0.8.

In one embodiment of the method the polymeric fibers form a nanoweb. Preferably the polymeric fibers of said fabric of step (i) have a number average fiber diameter of between 200 and 1000 nm, and more preferably between 150 and 600 nm. The polymeric fibers may optionally further be made by a process selected from the group consisting of electrospinning, electroblowing, spunbonding and melt blowing.

In a further embodiment of the method the particles comprise a material selected from the group consisting of ceramic, metal or metallic oxide materials, or a mixture thereof.

In a further embodiment of the method the thickness dimension of said fabric of step (i) may be between about 150-200 µm.

In a still further embodiment said fabric of step (i) has been calendered effective to reduce the pore size of said fabric by about 20-50% less than a first pore size before calendering of said fabric.

In a further embodiment the pore size of said fabric of step (i) is between about 0.5 - 10 µm.

The invention is also directed towards a method for removing the high particle size tail of the particle size distribution of a slurry while leaving smaller particles in the slurry comprising the steps of;
(i) providing a filter media having a first and second side and being formed of at least one sheet of a fabric having a first and second surface defining a thickness dimension of said fabric there between, said fabric comprising at least one layer comprising polymeric fibers having a mean number average fiber diameter of less than 1000 nm;
(ii) supplying a slurry stream having a multiplicity of particle sizes comprising a first set of particles of maximum dimension less than 0.2 microns (µm) and a second set of larger particles of maximum individual dimension of greater than 0.45 microns to the first side of said filter media; and
(iii) passing the slurry stream through said filter media to the second side thereof whereby at least a portion of the larger particles in the slurry are retained on the first side of said media,
(iv) stopping the flow of slurry through the fabric when the pressure drop across the fabric is 415 kPa,
(v) applying a fluid back pressure across the fabric in a direction opposite to that of the slurry flow in which the back pressure is less than about 3 kPa and lasts for less than 5 seconds
(vi) resuming the flow of slurry through the fabric in the original direction;
wherein the ratio of the filtration efficiency of the fabric towards the first set of particles to the filtration efficiency towards the second set of particles is less than 0.01 and the filtration efficiency of the fabric towards the first set of particles is less than 1% and wherein the pressure drop across the fabric after step (vi) is no more than 25 % higher than it was when the flow commenced in step (iii).

### DETAILED DESCRIPTION OF PREFERRED EMBODIMENTS

The term "nanofiber" as used herein refers to fibers having a number average diameter or cross-section less than about 1000 nm, even less than about 800 nm, even between about 50 nm and 500 nm, and even between about 100 and 400 nm or even 150 and 600 nm. The term diameter as used herein includes the greatest cross-section of non-round shapes.

The term "nonwoven" means a web including a multitude of randomly distributed fibers. The fibers generally can be bonded to each other or can be unbonded. The fibers can be staple fibers or continuous fibers. The fibers can comprise a single material or a multitude of materials, either as a combination of different fibers or as a combination of similar fibers each comprised of different materials. A "nanoweb" is a nonwoven web that comprises nanofibers. The term "nanoweb" as used herein is synonymous with the term "nanofiber web."

For illustration, the filter media of the present invention is described in connection with its use as a filter element within a conventional cartridge filter assembly which may coupled in fluid communication with a chemical-mechanical polishing (CMP) slurry. Assemblies of such type and their construction are described further in commonly-assigned U.S. Pat. No. 5,154,827, and elsewhere in U.S. Pat. Nos. 4,056,476; 4,104,170; 4,663,041; 5,154,827; and 5,543,047. It will be appreciated, however, that aspects of the present invention may find utility in other filter assembles such as capsules having integral media, housings, fittings, and the like. Use within those such other applications therefore should be considered to be expressly within the scope of the present invention.

The present is directed towards a method for filtering large particles from a slurry comprising the step of passing the slurry through a filter medium that comprises a nanoweb. Specifically, in one embodiment, the method comprises the steps of;
(i) providing a filter media having a first and second side and being formed of at least one sheet of a fabric having a first and second surface defining a thickness dimension of said fabric there between, said fabric comprising at least one layer comprising nanofibers having a mean number average fiber diameter of less than 1000 nm,
(ii) supplying a slurry stream having a multiplicity of particle sizes comprising a first set of particles of maximum dimension less than 0.2 microns and a second set of particles of maximum individual dimension of greater than 0.45 microns to the first side of said filter media, and
(iii) passing the slurry stream through said filter media to the second side thereof whereby at least a portion of the larger particles in the slurry are retained on the first side of said media,
wherein the filtration efficiency of the fabric towards the first set of particles is less than 0.01 and the filtration efficiency towards the second set of particles is greater than 0.8.

In a CMP slurry, the largest number of particles will belong to the first set of particles, and these are typically less than 0.1 microns. The invention is not limited to this situation, however, and any arbitrary particle size distribution that conforms to the scope of the claims can be filtered by the method of the invention.

The as-spun nanoweb comprises primarily or exclusively nanofibers, advantageously produced by electrospinning, such as classical electrospinning or electroblowing, and also, by meltblowing or other such suitable processes. Classical electrospinning is a technique illustrated in U.S. Patent No. 4,127,706, incorporated herein in its entirety, wherein a high voltage is applied to a polymer in solution to create nanofibers and nonwoven mats. However, total throughput in electrospinning processes is too low to be commercially viable in forming heavier basis weight webs.

The "electroblowing" process is disclosed in World Patent Publication No. WO 03/080905, incorporated herein by reference in its entirety. A stream of polymeric solution comprising a polymer and a solvent is fed from a storage tank to a series of spinning nozzles within a spinneret, to which a high voltage is applied and through which the polymeric solution is discharged. Meanwhile, compressed air that is optionally heated is issued from air nozzles disposed in the sides of, or at the periphery of the spinning nozzle. The air is directed generally downward as a blowing gas stream which envelopes and forwards the newly issued polymeric solution and aids in the formation of the fibrous web, which is collected on a grounded porous collection belt above a vacuum chamber. The electroblowing process permits formation of commercial sizes and quantities of nanowebs at basis weights in excess of about 1 gsm, even as high as about 40 gsm or greater, in a relatively short time period.

A substrate or scrim can be arranged on the collector to collect and combine the nanofiber web spun on the substrate, so that the combined fiber web is used as a high-performance filter, wiper and so on. Examples of the substrate may include various nonwoven cloths, such as meltblown nonwoven cloth, needle-punched or spunlaced nonwoven cloth, woven cloth, knitted cloth, paper, and the like, and can be used without limitations so long as a nanofiber layer can be added on the substrate. The nonwoven cloth can comprise spunbond fibers, dry-laid or wet-laid fibers, cellulose fibers, melt blown fibers, glass fibers, or blends thereof.

Polymer materials that can be used in forming the nanowebs of the invention are not particularly limited and include both addition polymer and condensation polymer materials such as, polyacetal, polyamide, polyester, polyolefins, cellulose ether and ester, polyalkylene sulfide, polyarylene oxide, polysulfone, modified polysulfone polymers, and mixtures thereof. Preferred materials that fall within these generic classes include, poly (vinylchloride), polymethylmethacrylate (and other acrylic resins), polystyrene, and copolymers thereof (including ABA type block copolymers), poly (vinylidene fluoride), poly (vinylidene chloride), polyvinylalcohol in various degrees of hydrolysis (87% to 99.5%) in crosslinked and non-crosslinked forms. Preferred addition polymers tend to be glassy (a Tg greater than room temperature). This is the case for polyvinylchloride and polymethylmethacrylate, polystyrene polymer compositions or alloys or low in crystallinity for polyvinylidene fluoride and polyvinylalcohol materials. One preferred class of polyamide condensation polymers are nylon materials, such as nylon-6, nylon-6, 6, nylon 6, 6-6, 10, and the like. When the polymer nanowebs of the invention are formed by meltblowing, any thermoplastic polymer capable of being meltblown into nanofibers can be used, including polyolefins, such as polyethylene, polypropylene and polybutylene, polyesters such as poly (ethylene terephthalate) and polyamides, such as the nylon polymers listed above.

It can be advantageous to add known-in-the-art plasticizers to the various polymers described above, in order to reduce the Tg of the fiber polymer. Suitable plasticizers will depend upon the polymer to be electrospun or electroblown, as well as upon the particular end use into which the nanoweb will be introduced. For example, nylon polymers can be plasticized with water or even residual solvent remaining from the electrospinning or electroblowing process. Other known-in-the-art plasticizers which can be useful in lowering polymer T_{g} include, but are not limited to aliphatic glycols, aromatic sulphanomides, phthalate esters, including but not limited to those selected from the group consisting of dibutyl phthalate, dihexl phthalate, dicyclohexyl phthalate, dioctyl phthalate, diisodecyl phthalate, diundecyl phthalate, didodecanyl phthalate, and diphenyl phthalate, and the like. The Handbook of Plasticizers, edited by George Wypych, 2004 Chemtec Publishing, incorporated herein by reference, discloses other polymer/plasticizer combinations which can be used in the present invention.

Advantageously, the retention profile of filter media of the present invention may be tailored for specific applications by optionally calendering the fabric sheet, such as by compressing between the heated, rotating rolls of a roll mill or the like. For thermoplastic fabric sheets, the rolls may be maintained at a temperature which is less than the melting point of the resin. "Melting point" is used herein in its broadest sense to include a temperature or temperature range evidencing in the material a transition from a form-stable crystalline or glassy solid phase to a flowable liquid, semi-liquid, or otherwise viscous phase or melt which may be generally characterized as exhibiting intermolecular chain rotation.

The resins contemplated for the filter media of the present invention typically will exhibit a peak melting points of between about 150-280 °C as determined by means of differential scanning calorimeter (DSC) or differential thermal analysis (DTA). For amorphous or other thermoplastic resins not having a clearly defined melting peak, the term melting point is used interchangeably with glass transition or softening point.

Thus, a filter media offering a unique convergence of properties is described which is especially adapted for use in CMP slurries. Such media unexpectedly exhibits a particle retention profile comparable to surface filtering membranes, but with a service life which is more like that of a depth filtering media.

The invention is also directed to a method as described in any of the embodiments above and including the step of back pulsing the media. The media of the invention has the desirable characteristic that the pressure drop across the membrane can be reduced to very close to its original initial value at the beginning of filtration with the application of a very low back pressure. Accordingly, the method of the invention also optionally comprises the steps of stopping the flow of slurry through the fabric when the pressure drop across the fabric is 415 kPa, applying a fluid back pressure across the fabric in a direction opposite to that of the slurry flow in which the back pressure is less than about 3 kPa and lasts for less than 5 seconds and then resuming the flow of slurry through the fabric in the original direction. The pressure drop across the fabric after resuming the flow of slurry is no more than 25 % higher than it was when the flow commenced originally.

### Examples

A 24% solution of polyamide-6,6 in formic acid was spun by electroblowing as described in WO 03/080905. The number average fiber diameter for Example 1 was about 420 nm. The as-spun media in Example 1 was co-pleated between two scrims of spunbond media for support. The pleated media was converted to a standard 222 10" cartridge with approximately seven square feet of surface area of the media.

The media for Example 2 was calendered from Example 1. The nanofiber sheets of Examples 1 were calendered by delivering the nanofiber sheets to a two roll calender nip from an unwind. A device for spreading the sheet prior to the nip was used to maintain a flat, wrinkle free sheet upon entering the nip. The hard roll was a 16.04 inch (40.74 cm) diameter steel roll, and the soft roll was a cotton-wool composite roll having a Shore D hardness of about 78, and about 20.67 inches (52.50 cm) in diameter. The media were calendered with the steel roll heated to 150°C and at line speed of 45 ft/min. Nip pressure is 916.2 PLI. The media was then co-pleated with two support scrims of spunbond media into a standard 222 10" filter cartridge.

A comparative filter was tested. The filter was obtained from Pall Corporation (East Hills, NY) The Pall Corp. NXA series filters are manufactured using CoLD fiber meltblowing technology, which integrates Co-Located Large Diameter fibers within the fine fiber matrix to produce a rigid structural network to the cartridge.

Syton® HT50 CMP slurry was obtained from DuPont Air Products Nanomaterials LLC (Tempe, AZ). 380 liters of 10% solids slurry was prepared in a tank by mixing the as-received 50% solids slurry with 0.1 micron filtered DI water. A sample of the slurry was collected for the unfiltered particle count and % solids measurement. The slurry was then filtered at a flow rate of 19 L/min utilizing a closed loop filtration system consisting of a storage tank, Levitronix LLC (Waltham, MA) BPS-4 centrifugal pump system, flowmeter, 10" filter housing containing a 10" filter cartridge and pressure sensors located immediately before and after the filter housing. A sample of the slurry was collected after 20 minutes (380 liters passed through filter) for particle count and % solids measurement and the filtration test was concluded. The unfiltered and filtered samples were measured for % solids using a Mettler Toledo (Columbus, OH) HR83P moisture analyzer. The unfiltered and filtered samples were measured for particle counts using Particle Measuring Systems Inc. (Boulder, CO) Liquilaz SO2 and Liquilaz SO5 liquid optical particle counters. In order to measure the particle counts, the 10% solids slurry was diluted with 0.1 micron filtered DI water to a final concentration at the particle counting sensors of 0.000075% solids (a dilution factor of 133333.3).

Filtration efficiency was calculated at a given particle size from the ratio of the particles number concentration passed by the medium to the particle concentration that impinged on the medium within a particle "bin" size corresponding to 0.01 microns. Overall efficiency was calculated from the weight percent solids passed by the medium divided by the weight percent solids impinging on the medium.

Table 1 shows the solids contents of the samples filtered by the nanoweb construction and the comparative meltblown construction. The actual solids removed form the colloidal suspensions by the filers is low - of the order of 0.02%, corresponding to a filtration efficiency of around 0.2% only.

**TABLE 1**

| Solids Contents of Unfiltered and Filtered Samples | |
|---|---|
| Sample | % Solids |
| Unfiltered (pre Nanoweb) | 9.69 |
| Filtered (Nanoweb) | 9.67 |
| Unfiltered (pre meltblown) | 9.72 |
| Filtered (meltblown) | 9.7 |

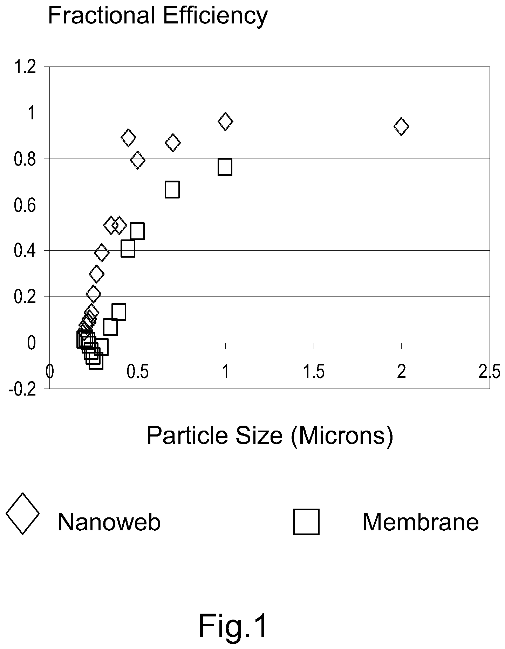

Figure 1 shows the results of fractional filtration efficiency versus particle size for particles separated into 0.01 micron bins. For particles of diameter less than around 0.2 microns, both the meltblown and the nanoweb based filter have efficiencies of close to zero. However the nanoweb based filter has a desirable steeper curve as particle size increases that is not obtainable with a meltblown based construction.

Table 1 and figure 1 confirm the high filtration efficiency that the nanoweb sample has for the larger, undesired, particles, while still passing at least around 99.98% of the total particle count that predominantly consist of smaller, sub 0.2 micron particles.

## Claims

1. A method for removing the high particle size tail of the particle size distribution of a slurry while leaving smaller particles in the slurry comprising the steps of;
(i) providing a filter media having a first and second side and being formed of at least one sheet of a fabric, said fabric comprising at least one layer comprising polymeric fibers having a mean number average fiber diameter of less than 1000 nm, and forming a nanoweb,
(ii) supplying a slurry stream having a multiplicity of particle sizes comprising a first set of particles of maximum dimension less than 0.2 microns and a second set of larger particles of maximum individual dimension of greater than 0.45 microns to the first side of said filter media, and
(iii) passing the slurry stream through said filter media to the second side thereof whereby at least a portion of the larger particles in the slurry are retained on the first side of said media,
wherein the filtration efficiency of the fabric towards the first set of particles is less than 0.01 and the filtration efficiency towards the second set of particles is greater than 0.8.

2. The method of claim 1 in which the polymeric fibers are made by a process selected from the group consisting of electrospinning, electroblowing, spunbonding, and melt blowing.

3. The method of claim 1 wherein the particles comprise a material selected from the group consisting of ceramic, metal or metallic oxide materials, or a mixture thereof.

4. The method of claim 1 wherein the thickness dimension of said fabric of step (i) is between about 150-200 µm.

5. The method of claim 1 wherein the polymeric fibers of said fabric of step (a) have a number average fiber diameter of between 150 nm to 600 nm.

6. The method of claim 1 wherein said fabric of step (i) has been calendered effective to reduce the pore size of said fabric by about 20-50% less than a first pore size before calendering of said fabric.

7. The method of claim 1 wherein the pore size of said fabric of step (i) is between about 0.5 - 10 µm.

8. The method of claim 1 wherein the at least one sheet of fabric has a first and second surface defining a thickness dimension of said fabric there between, and further comprising,
(iv) stopping the flow of slurry through the fabric when the pressure drop across the fabric is 415 kPa,
(v) applying a fluid back pressure across the fabric in a direction opposite to that of the slurry flow in which the back pressure is less than about 3 kPa and lasts for less than 5 seconds and,
(vi) resuming the flow of slurry through the fabric in the original direction.

## Patentansprüche

1. Verfahren zum Entfernen des Schwanzes mit hoher Teilchengröße der Teilchengrößenverteilung einer Aufschlämmung, während kleinere Teilchen in der Aufschlämmung verbleiben, umfassend die Schritte:
(i) Bereitstellen eines Filtermediums mit einer ersten und zweiten Seite und das aus mindestens einem flächigen textilen Gebilde gebildet ist, wobei das textile Gebilde mindestens eine Lage umfasst, die polymere Fasern aufweist, die einen mittleren zahlengemittelten Faserdurchmesser von weniger als 1.000 nm haben,
und ein Nanoweb bildet,
(ii) Zuführen eines Aufschlämmungsstroms, der eine Vielzahl von Teilchengrößen aufweist, umfassend einen ersten Satz von Teilchen mit einer maximalen Abmessung von weniger als 0,2 Mikrometer und einen zweiten Satz von größeren Teilchen mit einer maximalen individuellen Abmessung von mehr als 0,45 Mikrometer, auf der ersten Seite des Filtermediums, und
(iii) den Aufschlämmungsstrom durch das Filtermedium zu dessen zweiter Seite leiten, wodurch mindestens ein Teil der größeren Teilchen in der Aufschlämmung auf der ersten Seite des Mediums zurückgehalten wird,
wobei die Filtereffizienz des textilen Gebildes in Bezug auf den ersten Satz von Partikeln kleiner ist als 0,01 und die Filtereffizienz in Bezug auf den zweiten Satz von Partikeln größer ist als 0,8.

2. Verfahren nach Anspruch 1, wobei die polymeren Fasern hergestellt sind mit Hilfe eines Verfahrens, das ausgewählt ist aus der Gruppe bestehend aus Elektrospinnen, Elektroblasen, Spinnvlies-Bondieren und Schmelzblasen.

3. Verfahren nach Anspruch 1, wobei die Partikel ein Material umfassen, das ausgewählt ist aus der Gruppe bestehend aus Keramik-, Metall- oder Metalloxidmaterialien oder einer Mischung davon.

4. Verfahren nach Anspruch 1, wobei die Dickenabmessung des textilen Gebildes von Schritt (i) zwischen etwa 150 und 200 µm liegt.

5. Verfahren nach Anspruch 1, wobei die polymeren Fasern des textilen Gebildes von Schritt (i) einen zahlengemittelten Faserdurchmesser zwischen 150 nm und 600 nm haben.

6. Verfahren nach Anspruch 1, wobei das textile Gebilde von Schritt (i) effektiv kalandriert wurde, um die Porengröße des textilen Gebildes um etwa 20 bis 50% weniger als eine erste Porengröße vor dem Kalandrieren des textilen Gebildes zu reduzieren.

7. Verfahren nach Anspruch 1, wobei die Porengröße des textilen Gebildes von Schritt (i) zwischen etwa 0,5 und 10 µm liegt.

8. Verfahren nach Anspruch 1, wobei das mindestens eine flächige textile Gebilde eine erste und zweite Oberfläche aufweist, die dazwischen eine Dickenabmessung des textilen Gebildes festlegt und ferner umfasst:
(iv) Anhalten des Flusses der Aufschlämmung durch das textile Gebilde, wenn der Druckabfall auf dem ganzen textilen Gebilde 415 kPa beträgt,
(v) Aufbringen eines Fluidgegendrucks auf dem ganzen textilen Gebilde in einer Richtung entgegengesetzt zu derjenigen des Aufschlämmungsstroms, in welchem der Gegendruck kleiner ist als etwa 3 kPa und weniger als 5 Sekunden dauert, und
(vi) Wiederaufnehmen des Flusses der Aufschlämmung durch das textile Gebilde in der ursprünglichen Richtung.

## Revendications

1. Procédé pour le retrait de la queue à grosse granulométrie de la distribution granulométrique d'une bouillie tout en laissant les particules plus petites dans la bouillie comprenant les étapes:
(i) de fourniture d'un milieu filtrant ayant un premier et un second côté et qui est formé d'au moins une feuille d'un tissu, ledit tissu comprenant au moins une couche comprenant des fibres polymères possédant un diamètre de fibre de moyenne en nombre moyen de moins de 1000 nm,
et de formation d'une nanotoile,
(ii) d'approvisionnement d'un courant de bouillie ayant une multiplicité de tailles de particules comprenant un premier groupe de particules de dimension maximum de moins de 0,2 microns et un second groupe de particules plus grosses de dimension individuelle maximum de plus de 0,45 microns sur le premier côté dudit milieu filtrant, et
(iii) de passage du courant de bouillie à travers ledit milieu filtrant vers le second côté de celui-ci, en conséquence de quoi au moins une portion des particules plus grosses dans la bouillie sont retenues sur le premier côté dudit milieu,
dans lequel le rendement de filtration du tissu vis-à-vis du premier groupe de particules est inférieur à 0,01 et le rendement de filtration vis-à-vis du second groupe de particules est supérieur à 0,8.

2. Procédé selon la revendication 1, dans lequel les fibres polymères sont fabriquées par un procédé choisi dans le groupe constitué par un filage électrostatique, un soufflage électrostatique, un filage-liage et une fusion-soufflage.

3. Procédé selon la revendication 1, dans lequel les particules comprennent un matériau choisi dans le groupe constitué par des matériaux céramiques, métalliques ou d'oxyde métallique ou un mélange de ceux-ci.

4. Procédé selon la revendication 1, dans lequel la dimension d'épaisseur dudit tissu de l'étape (i) est entre environ 150 et 200 µm.

5. Procédé selon la revendication 1, dans lequel les fibres polymères dudit tissu de l'étape (i) ont un diamètre de fibre de moyenne en nombre entre 150 nm et 600 nm.

6. Procédé selon la revendication 1, dans lequel ledit tissu de l'étape (i) a été calandré de manière efficace pour réduire la taille de pores dudit tissu d'environ 20-50% inférieure à une première taille de pores avant le calandrage dudit tissu.

7. Procédé selon la revendication 1, dans lequel la taille de pores dudit tissu de l'étape (i) est entre environ 0,5 et 10 µm.

8. Procédé selon la revendication 1, dans lequel la au moins une feuille de tissu possède une première et une seconde surface définissant une dimension d'épaisseur dudit tissu entre celles-ci, et comprenant en outre:
(iv) l'arrêt de l'écoulement de la bouillie à travers le tissu lorsque la chute de pression d'un bout à l'autre du tissu est de 415 kPa,
(v) l'application d'une contre-pression de fluide d'un bout à l'autre du tissu dans une direction opposée à celle de l'écoulement de la bouillie, dans lequel la contre-pression est inférieure à environ 3 kPa et dure moins de 5 secondes et
(vi) la reprise de l'écoulement de la bouillie à travers le tissu dans la direction d'origine.
